# EUROPEAN PATENT APPLICATION

(11) **EP 4 203 368 A1**
(43) Date of publication of application: **28.06.2023**
(21) Application number: 21857701.3
(22) Date of filing: 18.08.2021
(51) Int. Cl.: H04L 5/00

(54) **DATA TRANSMISSION METHOD AND DEVICE, COMMUNICATION NODE, AND STORAGE MEDIUM**

(30) Priority: 21.08.2020 CN 202010850774
(71) Applicant: Sanechips Technology Co., Ltd., Shenzhen, Guangdong 518055 (CN)
(72) Inventor: ZHANG, Dingming, Shenzhen, Guangdong 518057 (CN); LIU, Xing, Shenzhen, Guangdong 518057 (CN)
(74) Representative: Ricker, Mathias
(86) International application number: PCT/CN2021/113246
(87) International publication number: WO 2022/037609

(57) **Abstract**

Provided are a data transmission method, a data transmission device, a communication node, and a computer-readable storage medium. The data transmission method includes the following: a virtual channel is determined according to a resource element mapping type, where the virtual channel includes at least one of a first-type channel and a second-type channel; and data of the virtual channel is mapped to a corresponding resource block according to the mapping relationship between the virtual channel and each resource block in a bandwidth range to transmit the data through the corresponding resource block, where each resource block includes a set number of resource elements.

## Description

The present application claims priority to Chinese Patent Application No. 202010850774.9 filed on Aug. 21, 2020, the disclosure of which is incorporated herein by reference in its entirety.

### TECHNICAL FIELD

The present application relates to the field of wireless communication network technology and, in particular, to a data transmission method and device, a communication node, and a storage medium.

### BACKGROUND

In a wireless communication system, to-be-transmitted data needs to be mapped to resource elements (REs) in a frequency-domain resource network so that the data is transmitted through the REs. The 3rd Generation Partnership Project (3GPP) implements the mapping of frequency-domain resources and data transmission by defining different physical channels and logical channels. In communication systems implemented based on different technologies, for example, Long-Term Evolution (LTE), Fifth Generation Wireless (5G) Systems, and a New Radio (NR) system, resource mapping has different requirements and implementation methods. In different protocols or different bandwidths, definition types of physical channels and resource mapping manners of each channel are various. Therefore, resource mapping and data transmission in a specific protocol or specific bandwidth are unsuitable for a scenario of another protocol or another bandwidth, making the computational complexity of resource mapping of each channel relatively high, thereby affecting the efficiency of data transmission, and failing to meet the communication requirements for a real-time switch between different scenarios.

### SUMMARY

Embodiments of the present application provide a data transmission method. The method includes the following.

A virtual channel is determined according to a resource element mapping type. The virtual channel includes at least one of a first-type channel and a second-type channel.

Data of the virtual channel is mapped to a corresponding resource block according to a mapping relationship between the virtual channel and each resource block (RB) in a bandwidth range so that the data is transmitted through the corresponding resource block. The each resource block includes a set number of resource elements.

Embodiments of the present application further provide a data transmission device. The data transmission device includes a channel defining module and a mapping and transmission module.

The channel defining module is configured to determine a virtual channel according to a resource element mapping type. The virtual channel includes at least one of a first-type channel and a second-type channel.

The mapping and transmission module is configured to map, according to a mapping relationship between the virtual channel and each resource block in a bandwidth range, data of the virtual channel to a corresponding resource block to transmit the data through the corresponding resource block. The each resource block includes a set number of resource elements.

Embodiments of the present application further provide a communication node. The communication node includes one or more processors and a storage apparatus configured to store one or more programs.

When executed by the one or more processors, the one or more programs cause the one or more processors to perform the preceding data transmission method.

Embodiments of the present application further provide a computer-readable storage medium for storing a computer program. When the computer program is executed by a processor, the preceding data transmission method is performed.

### BRIEF DESCRIPTION OF DRAWINGS

FIG. 1 is a flowchart of a data transmission method according to an embodiment of the present application.
FIG. 2 is a diagram illustrating the mapping relationship between second-type channels and resource blocks according to an embodiment of the present application.
FIG. 3 is a flowchart of a data transmission method according to an embodiment of the present application.
FIG. 4 is a diagram illustrating that data of a plurality of first-type channels are segmented and mapped to different resource elements according to an embodiment of the present application.
FIG. 5 is a diagram illustrating that data of virtual channels is mapped to corresponding resource blocks according to an embodiment of the present application.
FIG. 6 is a structural diagram of a data transmission device according to an embodiment of the present application.
FIG. 7 is a structural diagram of the hardware structure of a communication node according to an embodiment of the present application.

### DETAILED DESCRIPTION

The present application is described hereinafter in conjunction with drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

In a wireless communication system, a communication node (for example, a base station) on the network side determines the resource mapping table of each channel by allocating logical resource blocks to various physical channels (for example, a physical downlink shared channel (PDSCH), a physical downlink control channel (PDCCH), and a physical broadcast channel (PBCH)). In order to complete the coherent demodulation of physical channel data, a demodulation reference signal (DMRS) may also be inserted into a resource of physical channel mapping, and the information of the DMRS is mapped to an RB of a physical channel in a multiplexing operation. Additionally, in order to complete the phase offset measurement of data, a phase tracking reference signal (PTRS) also needs to be inserted into a physical channel. In order to complete functions including the measurement of channel state information and beam management, a cell reference signal (CRS), a channel state information reference signal (CSI-RS), and the like are also introduced. Each preceding physical channel or each preceding physical signal has different definitions and manners of resource mapping in different protocols and different bandwidths. If a manner of resource mapping is defined for each physical channel or each physical signal, the computational complexity is relatively high, unable to meet the communication requirements for a real-time switch between different scenarios.

In embodiments of the present application, a data transmission method is provided. The data transmission method may be applied to a communication node. The communication node is a node with the function of resource allocation in the wireless communication system. For example, the communication node may be a device on the network side, a network management device, a base station, a serving node, or a centralized control unit. The method defines two types of virtual channels. Only for the mapping relationship between these two types of virtual channels and resource blocks, corresponding data is transmitted through corresponding resource blocks, reducing the complexity of resource mapping and thereby implementing efficient data transmission.

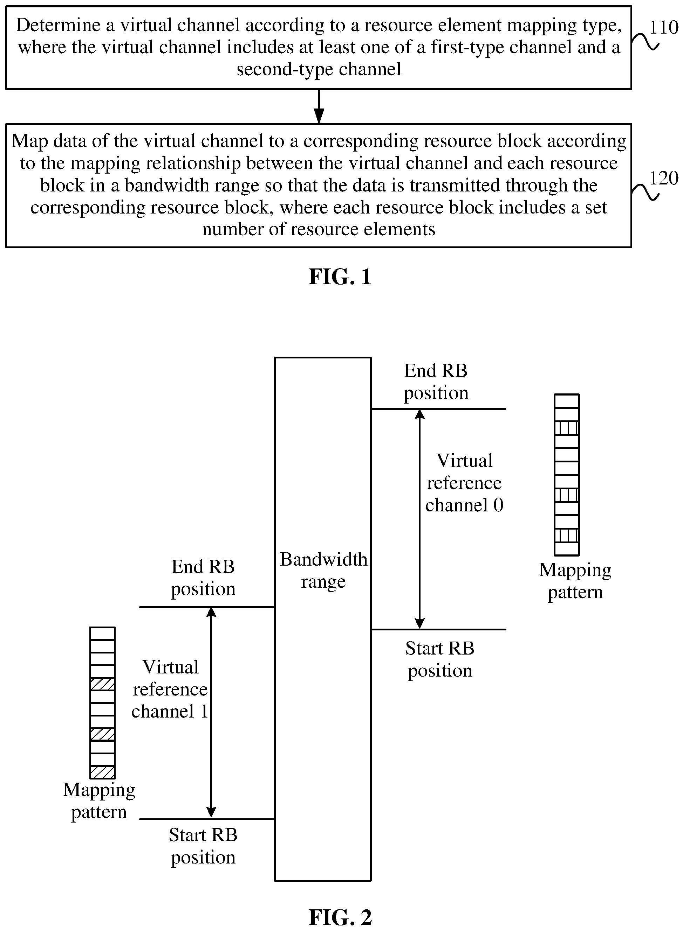

FIG. 1 is a flowchart of a data transmission method according to an embodiment of the present application. As shown in FIG. 1, the data transmission method provided in this embodiment includes step 110 and step 120.

In step 110, a virtual channel is determined according to a resource element mapping type. The virtual channel includes at least one of a first-type channel and a second-type channel.

In this embodiment, the virtual channel is a channel abstracted by re-classifying physical channels in the wireless communication system and physical signals in the wireless communication system according to different RE mapping types. Two types of virtual channels are included. A physical channel (for example, a PDSCH, a PDCCH, or a PBCH) can usually be mapped to only continuous resource elements and may serve as a first-type channel which may also be understood as a virtual service channel and is used for transmitting different service data. A physical signal (for example, a DMRS, a CRS, or a PTRS) is usually mapped to discontinuous resource elements in a multiplexing operation and may serve as a second-type channel which may also be understood as a virtual reference channel and is used for transmitting reference information required in processes including channel state measurement, channel quality measurement, and beam management.

In step 120, data of the virtual channel is mapped to a corresponding resource block according to the mapping relationship between the virtual channel and each resource block in a bandwidth range so that the data is transmitted through the corresponding resource block. Each resource block includes a set number of resource elements.

In this embodiment, the mapping relationship between the first-type channel and the resource block and the mapping relationship between the second-type channel and the resource block are defined separately. The process of resource mapping is a process in which data transmission is implemented by making the data of the virtual channel correspond to resource elements in the resource block according to the mapping relationship. On this basis, the same resource element mapping type may be used for the same type of channels, and data is transmitted through resource elements in a corresponding resource block, thereby reducing the complexity of resource mapping. The bandwidth range refers to an entire bandwidth corresponding to a downlink symbol and includes a plurality of resource blocks. Each resource block includes a set number of resource elements.

It is to be noted that the virtual service channel and the virtual reference channel may be each understood as an interface between a hardware accelerator and software. The communication node makes the mapping between a channel and a resource more flexible by defining the first-type channel and the second-type channel. The mapping relationship between the virtual channel and a resource is pre-defined according to, for example, an antenna port, a beam, and a resource configuration.

In the data transmission method in this embodiment, channels are divided into two types. Only for the mapping relationship between these two types of virtual channels and resource blocks, corresponding data is transmitted through a corresponding resource block, reducing the complexity of resource mapping, completing the resource mapping of any physical channel or the resource mapping of any physical signal with low delay, and thereby implementing efficient data transmission. Additionally, the two types of virtual channels are also expandable. With the change of protocols and application scenarios, even if a new physical channel or a new physical signal is introduced into the wireless communication system, the new physical channel or the new physical signal is abstracted as the first-type channel or the second-type channel according to the resource element mapping type so that resource mapping and data transmission are implemented according to the mapping relationship corresponding to a virtual channel.

In some embodiments, the resource element mapping type includes discontinuous mapping and non-continuous mapping.

Step 110 includes that a physical channel whose resource element mapping type is continuous mapping is taken as the first-type channel and that a physical signal whose resource element mapping type is discontinuous mapping is taken as the second-type channel.

In this embodiment, continuous mapping refers to mapping data of one type of channel to one or more groups of continuous resource elements in a resource block so that the data is transmitted. For example, one resource block includes twelve resource elements (RE0 to RE11), and continuous mapping refers to mapping data of one type of channel to RE0 to RE9 that are in the resource block. Continuous mapping also includes sparse mapping. That is, an unmapped resource element is allowed to exist in continuous resource elements according to a certain rule. For example, data of one type of channel is mapped to RE0 to RE3 that are in a resource block and RE8 to RE 11 that are in the resource block. No data of this type of channel is mapped to RE4 to RE7 that are in the resource block. Discontinuous mapping refers to mapping data of one type of channel to discontinuous resource elements in a resource block so that the data is transmitted. For example, the data is mapped to RE0, RE3, RE8, and the like that are in the resource block.

FIG. 2 is a diagram illustrating the mapping relationship between second-type channels and resource blocks according to an embodiment of the present application. As shown in FIG. 2, virtual reference channel 0 and virtual reference channel 1 are two second-type channels. In an entire bandwidth range, RBs corresponding to virtual reference channel 0 partially overlaps RBs corresponding to virtual reference channel 1. Each RB includes 12 REs which are numbered RE0 to RE11 from bottom to top in a mapping pattern. For virtual reference channel 0, in each RB between a start RB position and an end RB position, data of virtual reference channel 0 is mapped to RE1, RE4, and RE9 (as REs shown by vertical lines in a mapping pattern). For virtual reference channel 1, in each RB between a start RB position and an end RB position, data of virtual reference channel 1 is mapped to RE0, RE3, and RE8 (as REs shown by oblique lines in a mapping pattern). For each RB in the overlapped part, data of virtual reference channel 0 and data of virtual reference channel 1 may be mapped to different resource elements in each RB.

In some embodiments, before step 120, the data transmission method further includes the following.

In step 100, each orthogonal frequency-division multiplexing (OFDM) symbol of a resource element is determined as a downlink symbol according to a radio frame format.

In this embodiment, one OFDM symbol is taken as a processing unit. A communication node on the network side determines according to the radio frame format whether the OFDM symbol is a downlink symbol. In the case where the OFDM symbol is a downlink symbol, the resource mapping of a virtual channel and the data transmission of the virtual channel are performed on the OFDM symbol in the entire bandwidth range. If the OFDM symbol is an uplink symbol, no resource mapping or data transmission needs to be performed.

In some embodiments, step 120 includes that for each resource block in the bandwidth range, data of a virtual channel corresponding to each resource block is read in sequence and that the read data is mapped to a corresponding resource element in each resource block so that the data is transmitted through the corresponding resource element.

In this embodiment, a resource block is taken as a unit to complete the resource mapping for one OFDM symbol in the entire bandwidth range. According to the definition of a virtual channel, the mapping relationship of the virtual channel in each RB is obtained in sequence. Exemplarily, for RB0, if RB0 corresponds to one first-type channel, data of the first-type channel is read and mapped to a corresponding resource element in RB0 so that the data is transmitted through the corresponding resource element. For RB 1, if RB 1 corresponds to one first-type channel and one second-type channel, data of the first-type channel and data of the second-type channel are read separately and mapped to a corresponding resource element in RB1 so that the data is transmitted through the corresponding resource element. The rest can be done in the same manner. After all RBs in the entire bandwidth range and for one OFDM symbol complete resource mapping and data transmission, resource mapping and data transmission are performed for each resource block in the entire bandwidth range and for the next OFDM symbol according to the preceding method.

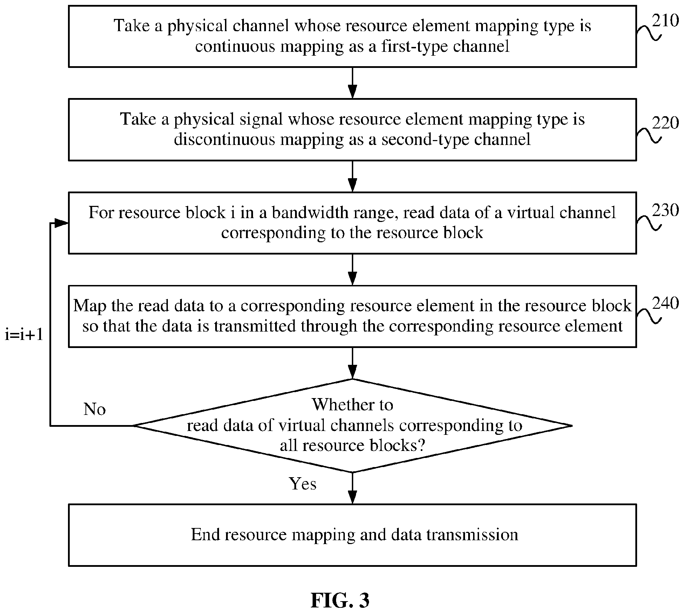

FIG. 3 is a flowchart of a data transmission method according to an embodiment of the present application. As shown in FIG. 3, the data transmission method includes steps 210 to 260 below.

In step 210, a physical channel whose resource element mapping type is continuous mapping is taken as a first-type channel.

In step 220, a physical signal whose resource element mapping type is discontinuous mapping is taken as a second-type channel.

In step 230, for resource block i in a bandwidth range, data of a virtual channel corresponding to the resource block is read.

In this embodiment, the mapping relationship between the first-type channel and the resource block and the mapping relationship between the second-type channel and the resource block are predefined by a communication node or determined according to a protocol.

In step 240, the read data is mapped to a corresponding resource element in the resource block so that the data is transmitted through the corresponding resource element.

In step 250, it is determined whether data of virtual channels corresponding to all resource blocks are read. If yes, step 260 is entered. If no, i = i + 1, and steps 230 to 250 are performed for the next resource block.

In step 260, resource mapping and data transmission are ended.

In some embodiments, step 240 includes that in the case where one resource block corresponds to data of a plurality of first-type channels, data of each first-type channel is segmented and mapped to a respective different resource element in the resource block so that the data is transmitted through the respective different resource element.

In this embodiment, one RE in the RB can correspond to only data of one first-type channel. If one RE corresponds to data of a plurality of first-type channels, for the RE, only data of one first-type channel can be mapped, with data of other first-type channels discarded.

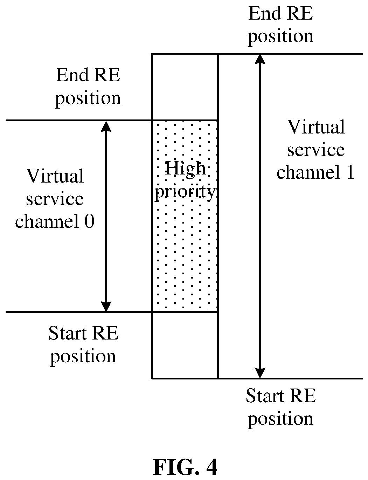

FIG. 4 is a diagram illustrating that data of a plurality of first-type channels are segmented and mapped to different resource elements according to an embodiment of the present application. As shown in FIG. 4, virtual service channel 0 and virtual service channel 1 are two different first-type channels. In one RB, REs in the middle part (shown in the shaded region) correspond to data of virtual service channel 0 and data of virtual service channel 1. In this case, the REs in this part may be used for transmitting data of one virtual service channel according to a set principle. For example, different first-type channels have different priorities. The REs in this part may be used for transmitting only data of the virtual service channel with the highest transmission priority. If the priority of virtual service channel 0 is higher than the priority of virtual service channel 1, as shown in FIG. 4, REs in the RB are divided into three segments from bottom to top and are used for transmitting data of virtual service channel 1, data of virtual service channel 0, and data of virtual service channel 1 separately.

It is to be noted that an example is taken in which the priority of virtual service channel 1 in FIG. 4 is higher than the priority of virtual service channel 0 in FIG. 4. A larger range exists between a start RE position corresponding to virtual service channel 1 and an end RE position corresponding to virtual service channel 1 and includes a start RE position corresponding to virtual service channel 0 and an end RE position corresponding to virtual service channel 0. In this case, three segments of REs in the RB are each used for transmitting data of virtual service channel 1.

In some embodiments, in the case where one RE corresponds to data of a plurality of first-type channels, data of one first-type channel may also be reserved according to another principle. For example, in FIG. 4, REs corresponding to virtual service channel 0 all belong to REs corresponding to virtual service channel 1. In order to improve the diversity of data transmission of the RB for different channels and reduce data losses of different channels, REs in the overlapped part may be used for transmitting data of virtual service channel 0, while REs in other parts are used for transmitting data of virtual service channel 1 In another example, the overlapped REs may be used for transmitting data of a virtual service channel with a relatively small number of corresponding REs or may be used for transmitting data of a virtual service channel with the number of the overlapped REs occupying a large proportion of the total number of REs corresponding to the virtual channel.

In some embodiment, that the read data is mapped to a corresponding resource element in the resource block so that the data is transmitted through the corresponding resource element includes that in the case where one resource block corresponds to data of a plurality of second-type channels, data of each second-type channel is mapped to resource elements in the resource block according to a mapping pattern so that the data is transmitted through the resource elements.

In this embodiment, an RE in the RB may correspond to a plurality of second-type channels. Data of each second-type channel is mapped to corresponding REs in the RB according to the mapping pattern in a multiplexing operation. The mapping pattern of each second-type channel may be defined by a communication node or a protocol.

In some embodiments, in the case of a plurality of second-type channels, no overlapped RE exists between mapping patterns of the second-type channels. If an overlapped RE exists between the mapping patterns of the second-type channels, for the RE, only data of one second-type channel is mapped, with data of other second-type channels discarded.

In some embodiments, at least one virtual channel is provided. In the case of a plurality of virtual channels, various first-type channels have different priorities.

In this embodiment, a virtual channel includes a first-type channel and/or a second-type channel. One or more virtual channels may be provided. Priorities of different virtual channels may be defined by the communication node or a protocol. In the case where an overlapped RE exists among REs in resource blocks corresponding to a plurality of virtual channels, for the overlapped RE, only data of the virtual channel with the highest priority is mapped, with data of other virtual channels discarded.

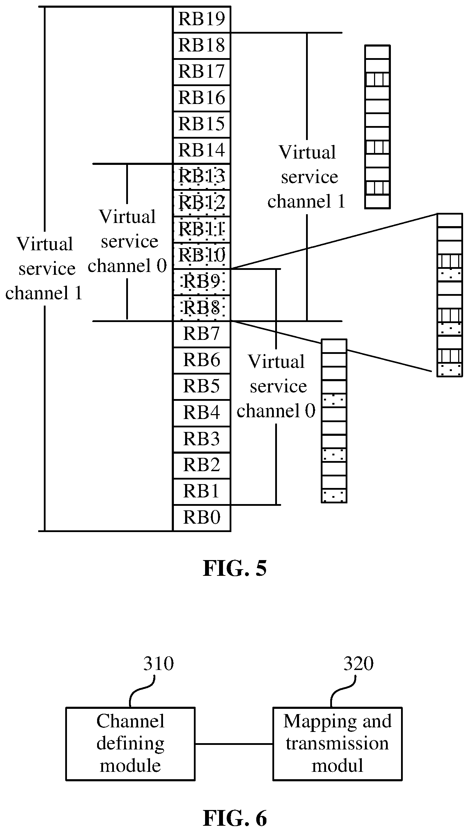

FIG. 5 is a diagram illustrating that data of virtual channels is mapped to corresponding resource blocks according to an embodiment of the present application. An example of 20 RBs is taken for description. First, the virtual channels below are defined according to a resource element mapping manner.

Virtual service channel 0: corresponds to RB8 to RB13.

Virtual service channel 1: corresponds to RB0 to RB19.

Virtual reference channel 0 (CSI-RS): corresponds to RB1 to RB9.

Virtual reference channel 1 (DM-RS): corresponds to RB8 to RB18.

The priority of virtual service channel 0 is greater than the priority of virtual service channel 1.

The process of resource mapping is as below.

For RB0, the virtual channel is parsed; it is determined that twelve REs of RB0 are each used for mapping data of virtual service channel 1; and then the data of virtual service channel 1 is read and mapped in sequence to RE0 to RE11 that belong to RB0.

For RB1, the virtual channel is parsed; it is determined that RB1 is used for mapping data of virtual service channel 1 and data of virtual reference channel 0; it is determined according to the mapping pattern of virtual reference channel 0 that three REs (shown by oblique lines) in RB1 are used for mapping the data of virtual reference channel 0 and that the remaining nine REs may be used for mapping the data of virtual service channel 1; the data of virtual service channel 1 and the data of virtual reference channel 0 are read separately; and the resource mapping for RB1 is completed.

Similarly, the resource mapping for RB2 to RB7 is completed in sequence.

For RB8, the virtual channel is parsed; it is determined that RB8 is used for mapping data of virtual service channel 0 (the priority of virtual service channel 1 is lower than the priority of virtual service channel 0, and data of virtual service channel 1 on RB8 is discarded), data of virtual reference channel 0, and data of virtual reference channel 1; it is determined according to the mapping pattern of virtual reference channel 0 and the mapping pattern of virtual reference channel 1 that three REs (shown by oblique lines) in RB8 are used for mapping the data of virtual reference channel 0, that three REs (shown by oblique lines) are used for mapping the data of virtual reference channel 1, and that six REs may be used for mapping the data of virtual service channel 0; data of each virtual channel is read; and the resource mapping for RB8 is completed.

Similarly, the resource mapping for all RBs in a bandwidth range is completed in sequence so that data of a virtual channel is mapped to REs in a corresponding RB and is transmitted.

In the data transmission method in this embodiment, two types of virtual channels are defined. Moreover, resource mapping and data transmission are implemented with a resource block as a unit according to the mapping relationship between virtual channels in each type and resource elements in resource blocks. Additionally, in the case where an overlapped RE exists among REs corresponding to different virtual channels, resource mapping can also be implemented effectively, improving the flexibility of resource mapping, reducing the complexity of resource mapping, and thereby improving data transmission efficiency.

Embodiments of the present application further provide a data transmission device. FIG. 6 is a structural diagram of a data transmission device according to an embodiment of the present application. As shown in FIG. 6, the data transmission device includes a channel defining module 310 and a mapping and transmission module 320.

The channel defining module 310 is configured to determine a virtual channel according to a resource element mapping type. The virtual channel includes at least one of a first-type channel and a second-type channel.

The mapping and transmission module 320 is configured to map, according to a mapping relationship between the virtual channel and each resource block in a bandwidth range, data of the virtual channel to a corresponding resource block so that the data is transmitted through the corresponding resource block. The each resource block includes a set number of resource elements.

The data transmission device in this embodiment divides channels into two types. Only for the mapping relationship between these two types of virtual channels and resource blocks, corresponding data is transmitted through corresponding resource blocks, reducing the complexity of resource mapping and thereby implementing efficient data transmission.

In some embodiments, the resource element mapping type includes discontinuous mapping and non-continuous mapping.

The channel defining module 310 is configured to perform the following.

A physical channel whose resource element mapping type is continuous mapping is taken as the first-type channel.

A physical signal whose resource element mapping type is the discontinuous mapping is taken as the second-type channel.

In some embodiments, the data transmission device further includes a downlink determination module.

The downlink determination module is configured to, before the data of the virtual channel is mapped to the corresponding resource block so that the data is transmitted through the corresponding resource block, determine each orthogonal frequency-division multiplexing (OFDM) symbol of a resource element as a downlink symbol according to a radio frame format.

In some embodiments, the mapping and transmission module 320 is configured to perform the following.

For each resource block in the bandwidth range, data of a virtual channel corresponding to each resource block is read in sequence, and the read data is mapped to a corresponding resource element in each resource block so that the data is transmitted through the corresponding resource element.

The read data is mapped to a corresponding resource element in each resource block so that the data is transmitted through the corresponding resource element.

In some embodiments, the mapping and transmission module 320 is configured to perform the following.

In the case where one resource block corresponds to data of a plurality of first-type channels, data of each first-type channel is segmented and mapped to a respective resource element in the resource block so that the data is transmitted through the respective resource element.

In some embodiments, the mapping and transmission module 320 is configured to perform the following.

In the case where one resource block corresponds to data of a plurality of second-type channels, data of each second-type channel is mapped to a corresponding resource element in the resource block according to a mapping pattern so that the data is transmitted through the corresponding resource element.

In some embodiments, the mapping and transmission module 320 is configured to perform the following.

At least one first-type channel is provided.In the case of a plurality of first-type channels, the first-type channels have different priorities.

The data transmission device provided in this embodiment and the data transmission method provided in the preceding embodiments belong to the same concept. For technical details not described in detail in this embodiment, reference may be made to any one of the preceding embodiments. The embodiment has the same beneficial effects as the performed data transmission method.

An embodiment of the present application further provides a communication node. The data transmission method in embodiments of the present application may be performed by the data transmission device in embodiments of the present application. The data transmission device may be implemented by software and/or hardware and integrated in the communication node. The communication node is a node with the function of resource allocation in the wireless communication system. For example, the communication node may be a device on the network side, a base station, a serving node, or a centralized control unit.

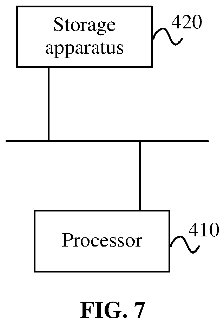

FIG. 7 is a structural diagram of the hardware structure of a communication node according to an embodiment of the present application. As shown in FIG. 7, the communication node provided in this embodiment includes a processor 410 and a storage apparatus 420. The communication node may include one or more processors. One processor 410 is shown as an example in FIG. 7. The processor 410 and the storage apparatus 420 may be connected via a bus or in other manners. The connection via the bus is shown as an example in FIG. 7.

The storage apparatus 420 may store one or more programs. When executed by the one or more processors 410, the one or more programs cause the one or more processors 410 to perform the data transmission method described in any preceding embodiment.

The storage apparatus 420 in the communication node, as a computer-readable storage medium, may be configured to store one or more computer programs which may be software programs, computer-executable programs and modules, such as program instructions/modules (for example, modules in the data transmission device, including a channel defining module 310 and a mapping and transmission module 320, as shown in FIG. 6) corresponding to the data transmission method in embodiments of the present application. The processor 410 executes software programs, instructions, and modules stored in the storage apparatus 420 to perform various function applications and data processing of the communication node, that is, to implement the data transmission method in the preceding method embodiments.

The storage apparatus 420 mainly includes a program storage region and a data storage region. The program storage region may store an operating system and an application program required by at least one function. The data storage region may store data (such as the resource unit mapping type in the preceding embodiments and data of a virtual channel in the preceding embodiments) created according to the use of the device. Additionally, the storage apparatus 420 may include a high-speed random-access memory and may also include a nonvolatile memory, such as at least one magnetic disk memory, a flash memory, or another nonvolatile solid-state memory. In some examples, the storage apparatus 420 may further include memories which are remotely disposed with respect to the processor 410. These remote memories may be connected to the communication node via a network. Examples of the preceding network include, but are not limited to, the Internet, an intranet, a local area network, a mobile communication network, and a combination thereof.

When the one or more computer programs included in the preceding communication node are executed by the one or more processors 410, the following operations are performed: A virtual channel is determined according to a resource element mapping type, where the virtual channel includes at least one of a first-type channel and a second-type channel; and data of the virtual channel is mapped to a corresponding resource block according to the mapping relationship between the virtual channel and each resource block in a bandwidth range so that the data is transmitted through the corresponding resource block, where each resource block includes a set number of resource elements.

The communication node provided in this embodiment and the data transmission method provided in the preceding embodiments belong to the same concept. For technical details not described in detail in this embodiment, reference may be made to any one of the preceding embodiments. The embodiment has the same beneficial effects as the performed data transmission method.

Embodiments of the present application further provide a computer-readable storage medium including computer-executable instructions. When the computer-executable instructions are executed by a computer processor, the data transmission method in embodiments of the present application is performed. The data transmission method includes the following: A virtual channel is determined according to a resource element mapping type, where the virtual channel includes at least one of a first-type channel and a second-type channel; and data of the virtual channel is mapped to a corresponding resource block according to the mapping relationship between the virtual channel and each resource block in a bandwidth range so that the data is transmitted through the corresponding resource block, where each resource block includes a set number of resource elements.

From the preceding description of embodiments, it is apparent to those skilled in the art that the present application may be implemented by use of software and general-purpose hardware or may be implemented by hardware. Based on this understanding, the technical solutions of the present application may be embodied in the form of a software product. The computer software product may be stored in a computer-readable storage medium such as a floppy disk, a read-only memory (ROM), a random-access memory (RAM), a flash memory, a hard disk, or an optical disk of a computer and includes multiple instructions for causing a computer device (which may be a personal computer, a server, or a network device) to perform the data transmission method in any embodiment of the present application.

The preceding are only example embodiments of the present application and not intended to limit the scope of the present application.

A block diagram of any logic flow in the drawings of the present application may represent program steps, or may represent interconnected logic circuits, modules, and functions, or may represent a combination of program steps and logic circuits, modules, and functions. Computer programs may be stored in a memory. The memory may be of any type appropriate for the local technical environment and may be implemented by using any appropriate data storage technology, such as, but not limited to, a read-only memory (ROM), a random access memory (RAM), an optical storage apparatus and system (a digital video disc (DVD) or a compact disk (CD)), and the like. Computer-readable storage media may include non-transitory storage media. A processor may be of any type appropriate for the local technical environment, such as, but not limited to, a general-purpose computer, a special-purpose computer, a microprocessor, a digital signal processor (DSP), an application-specific integrated circuit (ASIC), a field-programmable gate array (FGPA), and a processor based on a multi-core processor architecture.

The detailed description of example embodiments of the present application has been provided above through exemplary and non-restrictive examples. However, considering the drawings and the claims, various modifications and adjustments to the preceding embodiments are apparent to those skilled in the art without deviating from the scope of the present application. Accordingly, the proper scope of the present application is determined according to the claims.

## Claims

1. A data transmission method, comprising:
determining a virtual channel according to a resource element mapping type, wherein the virtual channel comprises at least one of a first-type channel and a second-type channel; and
mapping, according to a mapping relationship between the virtual channel and each resource block in a bandwidth range, data of the virtual channel to a corresponding resource block to transmit the data through the corresponding resource block, wherein the each resource block comprises a set number of resource elements.

2. The method according to claim 1, wherein
the resource element mapping type comprises discontinuous mapping and non-continuous mapping; and
determining the virtual channel according to the resource element mapping type comprises: taking a physical channel whose resource element mapping type is the continuous mapping as the first-type channel; and taking a physical signal whose resource element mapping type is the discontinuous mapping as the second-type channel.

3. The method according to claim 1, before mapping the data of the virtual channel to the corresponding resource block to transmit the data through the corresponding resource block, further comprising:
determining each orthogonal frequency-division multiplexing, OFDM, symbol of a resource element as a downlink symbol according to a radio frame format.

4. The method according to claim 1, wherein mapping, according to the mapping relationship between the virtual channel and the each resource block in the bandwidth range, the data of the virtual channel to the corresponding resource block to transmit the data through the corresponding resource block comprises:
for each resource block in the bandwidth range, sequentially reading data of a virtual channel corresponding to each resource block to obtain read data; and
mapping the read data to a corresponding resource element in the each resource block to transmit the data through the corresponding resource element.

5. The method according to claim 4, wherein mapping the read data to the corresponding resource element in the each resource block to transmit the data through the corresponding resource element comprises:
in a case where one resource block corresponds to data of a plurality of first-type channels, segmenting data of each first-type channel of the plurality of first-type channels and mapping the data of the each first-type channel to a respective resource element in the one resource block to transmit the data of each first-type channel through the respective resource element.

6. The method according to claim 4, wherein mapping the read data to the corresponding resource element in the each resource block to transmit the read data through the corresponding resource element comprises:
in a case where one resource block corresponds to data of a plurality of second-type channels, mapping, according to a mapping pattern, data of each second-type channel of the plurality of second-type channels to a respective resource element in the one resource block to transmit the data of each second-type channel through the respective resource element.

7. The method according to any one of claims 1 to 6, wherein
at least one virtual channel is provided; and
in a case where a plurality of virtual channels are provided, the plurality of virtual channels have different priorities.

8. A data transmission device, comprising:
a channel defining module configured to determine a virtual channel according to a resource element mapping type, wherein the virtual channel comprises at least one of a first-type channel and a second-type channel; and
a mapping and transmission module configured to map, according to a mapping relationship between the virtual channel and each resource block in a bandwidth range, data of the virtual channel to a corresponding resource block to transmit the data through the corresponding resource block, wherein the each resource block comprises a set number of resource elements.

9. A communication node, comprising:
one or more processors; and
a storage apparatus configured to store one or more programs,
wherein when executed by the one or more processors, the one or more programs cause the one or more processors to perform the data transmission method according to any one of claims 1 to 7.

10. A computer-readable storage medium for storing a computer program, wherein when the computer program is executed by a processor, the data transmission method according to any one of claims 1 to 7 is performed.
